# EUROPÄISCHE PATENTANMELDUNG

(11) **EP 4 844 514 A1**
(43) Veröffentlichungstag der Anmeldung: **25.11.2026**
(21) Anmeldenummer: 26179076.0
(22) Anmeldetag: 15.05.2026
(51) Int. Cl.: G05B 23/02, F24H 15/104, G01H 17/00

(54) **VERFAHREN ZUR BESTIMMUNG EINES ZUSTANDS EINER VIELZAHL VON AKTOREN IN EINEM WÄRMEERZEUGER**

(30) Priorität: 23.05.2025 DE 102025120295
(71) Anmelder: Viessmann Holding International GmbH, 35108 Allendorf (DE)
(72) Erfinder: SCHNEIDER, Peter, 35043 Marburg (DE); RÜSEN, Jan, 46414 Rhede (DE)
(74) Vertreter: MERH-IP Matias Erny Reichl Hoffmann Patentanwälte PartG mbB

(57) **Zusammenfassung**

Die vorliegende Erfindung betrifft ein Verfahren zur Bestimmung eines Zustands einer Vielzahl von Aktoren (4, 9) in einem Wärmeerzeuger (100) mittels eines Vibrationssensors (6a), eine Recheneinheit (5) zur Ausführung des Verfahrens und einen Wärmeerzeuger (100) mit der Recheneinheit (5). Das Verfahren umfasst ein Aufzeichnen eines Signals des Vibrationssensors (6a), ein Ermitteln eines Frequenzspektrums (200, 200', 300, 300', 300") des aufgezeichneten Signals, ein Vergleichen des ermittelten Frequenzspektrums (200, 200', 300, 300', 300") mit einem oder mehreren Vergleichsspektren und ein Bestimmen eines Zustands der Aktoren (4, 9) basierend auf dem Vergleich des ermittelten Frequenzspektrums (200, 200', 300, 300', 300") mit den Vergleichsspektren.

## Beschreibung

Die vorliegende Erfindung betrifft ein Verfahren zur Bestimmung eines Zustands einer Vielzahl von Aktoren in einem Wärmeerzeuger mittels eines Vibrationssensors, eine Recheneinheit zur Ausführung des Verfahrens und einen Wärmeerzeuger mit der Recheneinheit.

### Hintergrund der Erfindung

Moderne Wärmeerzeuger zum Heizen eines Gebäudes, wie z.B. Wärmepumpen oder Heizgeräte, enthalten üblicherweise eine Vielzahl von Aktoren, die dazu beitragen, eine gewünschte Wärmemenge bereitzustellen und/oder zu verteilen. Die Aktoren können beispielsweise Pumpen, Kompressoren, Ventilatoren und/oder Ventile umfassen. Da ein Ausfall bzw. eine Funktionseinschränkung eines der Aktoren eine Wärmebereitstellung des Wärmeerzeugers unmittelbar beeinträchtigt, ist es wünschenswert, jeden Aktor hinsichtlich seiner Funktion zu überwachen.

In diesem Zusammenhang offenbart EP 3 587 877 B1 ein System zum Erfassen von Betriebsbedingungen eines Ventils. Dazu ist an dem Ventil ein Beschleunigungssensor angebracht, mit dem charakteristische Schwingungen des Ventils erfasst werden können, die aufgrund von Fluidturbulenzen in dessen Strömungskanal entstehen. Auf diese Weise kann ein Öffnungs- und Schließvorgang des Ventils detektiert werden. Die Positionierung des Beschleunigungssensors direkt an dem Ventil bedeutet jedoch, dass zur Überwachung einer Vielzahl von Aktoren eine Vielzahl von Beschleunigungssensoren erforderlich ist, wodurch ein hoher messtechnischer Aufwand entsteht.

Daher ist es eine Aufgabe der vorliegenden Erfindung, ein Verfahren bereitzustellen, das es ermöglicht mit nur einem Vibrationssensor eine Vielzahl von Aktoren eines Wärmeerzeugers hinsichtlich ihrer Funktion zu überwachen.

Zur Lösung der Aufgabe werden die Merkmale der unabhängigen Ansprüche vorgeschlagen. Vorteilhafte Ausgestaltungen finden sich in den abhängigen Ansprüchen.

### Offenbarung der Erfindung

Das erfindungsgemäße Verfahren dient zur Bestimmung eines Zustands einer Vielzahl von Aktoren in einem Wärmeerzeuger mittels eines einzigen Vibrationssensors, der in dem Wärmeerzeuger beabstandet von den Aktoren angeordnet ist.

Der Wärmeerzeuger kann beispielsweise eine Wärmepumpe sein, die als Aktoren in ihrem Kältemittelkreislauf z.B. einen Kompressor zur Verdichtung von Kältemittel und ein Expansionsventil zur Entspannung von Kältemittel enthalten kann. Bei dem Expansionsventil kann es sich insbesondere um ein elektronisches Expansionsventil handeln. Alternativ kann der Wärmeerzeuger ein Heizgerät sein, das als Aktoren z.B. eine Pumpe zur Umwälzung eines Wärmeträgermediums (insbesondere Wasser) in einem Wärmeträgerkreislauf, einen Ventilator zur Zufuhr von Frischluft zu einem Brenner und/oder Abfuhr von Abgas von dem Brenner und ein Umschaltventil zur Umschaltung des Wärmeträgerkreislaufs von Heizbetrieb auf Warmwasserbereitung enthalten kann. Das Umschaltventil kann insbesondere ein 3/2-Wegeventil sein. Es versteht sich, dass sowohl die Wärmepumpe als auch das Heizgerät noch weitere Aktoren enthalten können, z.B. kann die Wärmepumpe ebenfalls über ein Umschaltventil verfügen. Bei dem Vibrationssensor kann es sich beispielsweise um einen piezoresistiven, piezoelektrischen oder kapazitiven Beschleunigungssensor handeln. Dieser kann insbesondere dazu eingerichtet sein, Beschleunigungen in drei Achsen (X-, Y- und Z-Achse) zu messen und daraus eine Vektorbeschleunigung zu berechnen. Dabei können z.B. die X-Achse horizontal, die Y-Achse vertikal und die Z-Achse senkrecht zur Oberfläche des Sensors verlaufen.

Der Vibrationssensor kann an einer zentralen Stelle des Wärmeerzeugers, z.B. an dessen Gehäuse, angebracht sein. Dadurch können Schwingungen aller Aktoren des Wärmeerzeugers über das Gehäuse auf den Vibrationssensor übertragen werden. Gemäß einer Ausführungsform kann der Vibrationssensor auf einer Platine einer Steuereinheit des Wärmeerzeugers angeordnet sein. In diesem Fall kann der Vibrationssensor als sogenannter MEMS-Beschleunigungssensor (Microelectro-mechanical Systems) ausgeführt sein und insbesondere auf dem kapazitiven Messprinzip basieren. Ein piezoresistiver oder piezoelektrischer MEMS-Beschleunigungssensor ist ebenso möglich. Die Steuereinheit kann z.B. mit dem Gehäuse des Wärmeerzeugers verbunden sein oder an einer anderen, geeigneten Stelle des Wärmeerzeugers angebracht sein. Diese Ausführungsform ermöglicht eine kompakte und integrale Bauweise des Vibrationssensors bei gleichzeitig guter Erfassung der Schwingungen aller Aktoren des Wärmeerzeugers. Der Vibrationssensor kann zudem ein digitaler Sensor sein, der kontinuierlich Beschleunigungen misst und ausgibt. Der Sensor kann Daten mit einer vorbestimmten Auflösung, z.B. 16 bit, erfassen und in einem Pufferspeicher zwischenspeichern. Dieser ermöglicht es, mehrere Messwerte auf einmal abzurufen und weiterzuverarbeiten. Ein analoger Vibrationssensor ist jedoch ebenso möglich.

Im Einzelnen wird bei dem erfindungsgemäßen Verfahren ein Signal des Vibrationssensors aufgezeichnet und ein Frequenzspektrum des aufgezeichneten Signals ermittelt. Zur Ermittlung des Frequenzspektrum kann eine schnelle Fouriertransformation (Fast Fourier Transformation - FFT), insbesondere eine reelle schnelle Fouriertransformation (RFFT) durchgeführt werden. Letztere eignet sich für reelle Signale, wie das Signal des Vibrationssensors, und nutzt deren Symmetrie im Frequenzspektrum, um Berechnungen zu beschleunigen und Speicherplatz zu verringern.

Gemäß einer Ausführungsform kann das Signal des Vibrationssensors immer dann aufgezeichnet werden, wenn sich eine Ansteuerung eines der Aktoren ändert. Dabei kann eine Ansteueränderung eines Aktors einen Einschalt- bzw. Ausschaltvorgang oder eine Zustandsänderung des betreffenden Aktors bewirken. Beispielsweise kann das Sensorsignal aufgezeichnet werden, wenn das Umschaltventil des Heizgeräts angesteuert und damit eingeschaltet wird, um den Heizwasserkreislauf von Heizbetrieb auf Warmwasserbereitung umzuschalten oder vice versa. Die Aufzeichnung kann dabei während der gesamten Ansteuerdauer bis zum Abschalten des Umschaltventils erfolgen. Alternativ kann das Sensorsignal z.B. bei einer Drehzahländerung der Pumpe, des Ventilators oder des Kompressors aufgezeichnet werden. In diesem Fall kann zweckmäßigerweise eine Kurzzeit-Fourier-Transformation (Short-Time Fourier Transformation - STFT) durchgeführt werden, um eine zeitliche Änderung des Frequenzspektrums des Sensorsignals darzustellen. Auf diese Weise kann ein dynamischer Betrieb des jeweiligen Aktors erfasst werden, bei dem dessen Funktion wirksam überprüft werden kann. Zudem kann das aufgezeichnete Signal gezielt einem aktiven Aktor zugeordnet und die aufgezeichnete Datenmenge begrenzt werden. Es ist jedoch ebenso möglich, dass das Signal des Vibrationssensors kontinuierlich aufgezeichnet wird.

Um den Zustand eines Aktors gezielt zu bestimmen, kann dessen Ansteuerung manuell geändert werden. Unter einer manuellen Ansteuerung eines Aktors soll eine Ansteuerung verstanden werden, die nicht automatisch im Rahmen eines Heizbetriebs des Wärmeerzeugers erfolgt, sondern zur Diagnose des betreffenden Aktors durchgeführt wird. Beispielsweise kann ein Aktor bei einer Inbetriebnahme oder Wartung des Wärmeerzeugers manuell angesteuert werden, um anhand des dabei ermittelten Frequenzspektrums dessen Funktion zu überprüfen.

Das jeweils ermittelte Frequenzspektrum wird dann mit einem oder mehreren Vergleichsspektren verglichen.

Gemäß einer Ausführungsform können für jeden Aktor eine Vielzahl von Vergleichsspektren ermittelt werden, die jeweils einen Zustand des Aktors repräsentieren. Ein Zustand jedes Aktors kann dabei insbesondere ein Betriebszustand und/oder ein Fehlerzustand des betreffenden Aktors sein. Ein Betriebszustand stellt dabei einen Zustand dar, den ein Aktor im Heizbetrieb des Wärmeerzeugers abhängig von dessen Betriebspunkt einnehmen kann.

Ein erstes Vergleichsspektrum kann beispielsweise einen Aktorzustand beschreiben, in dem dieser fehlerfrei funktioniert (Referenzspektrum). Ein zweites Vergleichsspektrum kann einen Aktorzustand beschreiben, in dem dieser noch ausreichend aber nicht mehr optimal funktioniert (Grenzspektrum), und ein drittes Vergleichsspektrum kann einen Fehlerzustand des Aktors repräsentieren (Fehlerspektrum). Es ist auch möglich, dass mehrere unterschiedliche Fehler- oder Grenzzustände in unterschiedlichen Fehler- bzw. Grenzspektren abgebildet werden. Ebenso können unterschiedliche Referenzspektren für unterschiedliche Betriebszustände eines Aktors ermittelt werden. Beispielsweise können für einen Kompressor einer Wärmepumpe bzw. eine Pumpe eines Heizgeräts unterschiedliche Referenzspektren abhängig vom Betriebspunkt der Wärmepumpe bzw. des Heizgeräts vorliegen. Es ist ebenso möglich in unterschiedlichen Betriebspunkten des Wärmeerzeugers Referenzspektren zu ermitteln, welche relevante Frequenzkomponenten aller in dem jeweiligen Betriebspunkt aktiven Aktoren enthalten. Auf diese Weise kann die Funktion mehrere Aktoren gleichzeitig überwacht werden.

Abhängig vom Typ des Aktors kann anstelle eines vollständigen Spektrums auch nur eine Amplitude bei einer vorbestimmten Frequenz als Referenz dienen. Beispielsweise erzeugt die Pumpe des Heizgeräts ein Schwingungssignal mit einer bestimmten Amplitude bei ihrer Drehfrequenz. Letztere kann im fehlerfreien Betrieb der Pumpe als Referenzamplitude ermittelt werden. Es ist ebenso möglich, dass unterschiedliche Referenzamplituden für unterschiedliche Drehfrequenzen ermittelt werden.

Die Vergleichsspektren bzw. Referenzamplituden können im Voraus, beispielsweise bei Auslieferung oder Inbetriebnahme des Wärmeerzeugers bestimmt und in einer Recheneinheit gespeichert werden. Bei der Recheneinheit kann es sich beispielsweise um die Steuereinheit des Wärmeerzeugers handeln. Ebenso können die ermittelten Frequenzspektren in der Recheneinheit gespeichert werden, um beispielsweise ein aktuell ermitteltes Frequenzspektrum mit einem vorherigen vergleichen und daraus auf schleichende Verhaltensänderungen des betreffenden Aktors schließen zu können. Des Weiteren können die im Voraus bestimmten Referenzspektren anhand von ermittelten Frequenzspektren aktualisiert werden, sofern die ermittelten Frequenzspektren einen fehlerfreien Aktorzustand beschreiben. Beispielsweise kann ein gleitender Mittelwert eines Referenzspektrums aus einer bestimmten Anzahl aufeinanderfolgender ermittelter Frequenzspektren bestimmt werden.

Basierend auf dem Vergleich des ermittelten Frequenzspektrums mit den Vergleichsspektren wird ein Zustand des Aktors bzw. der Aktoren bestimmt. Entspricht das ermittelte Frequenzspektrum einem der Vergleichsspektren, so kann daraus unmittelbar der Aktorzustand bestimmt werden. Um zu entscheiden, ob dies der Fall ist, kann der Vergleich insbesondere mittels eines KI-Modells erfolgen. Beispielsweise kann ein Convolutional Neural Network (CNN) verwendet werden, das basierend auf einer Vielzahl von Vergleichsspektren, die als Trainingsdaten herangezogen werden, mittels Faltung charakteristische Merkmale lernt, die jeweils einen Zustand eines oder mehrerer Aktoren repräsentieren. Es ist ebenso möglich ein Random Forest-Modell zu verwenden, das eine Vielzahl von Entscheidungsbäumen umfasst und durch zufälliges Auswählen von Merkmalen aus den Vergleichsspektren Muster lernt, anhand derer die Zustände des Aktors klassifiziert werden können.

Alternativ kann eine Abweichung des ermittelten Frequenzspektrums von dem Referenzspektrum des betreffenden Aktors bzw. der betreffenden Aktoren herangezogen werden, um auf dessen/deren Zustand zu schließen. Beispielsweise kann im Falle der Pumpe eine Abweichung der ermittelten Amplitude von der Referenzamplitude bei Drehfrequenz ausgewertet werden. Überschreitet die Amplitude des ermittelten Frequenzspektrums bei der zugehörigen Drehfrequenz den gespeicherten Referenzwert, so kann auf eine nicht optimal funktionierende bzw. fehlerhafte Pumpe geschlossen werden. In diesem Fall kann z.B. eine Höhe der Überschreitung als Kriterium verwendet werden, um zu beurteilen, ob das Verhalten der Pumpe noch zulässig oder bereits fehlerhaft ist. Insbesondere kann auch hier ein KI-Modell wie beispielsweise ein Autoencoder eingesetzt werden, das auf Basis einer Vielzahl von Referenzspektren trainiert wird, um anschließend Abweichungen vom Referenzzustand zu quantifizieren.

Gemäß einer Ausführungsform kann zumindest einer der Aktoren von einem Schrittmotor angetrieben werden. Dies kann insbesondere für das Expansionsventil der Wärmepumpe und/oder das Umschaltventil des Heizgeräts gelten. In diesem Fall können durch den Schrittmotor erzeugte Schwingungen von dem Vibrationssensor erfasst und deren Frequenzspektrum genutzt werden, um einen Zustand des jeweiligen Ventils zu bestimmen. Insbesondere können eine Schrittanzahl des Schrittmotors und/oder eine Endposition des Aktors basierend auf dem Vergleich des ermittelten Frequenzspektrums mit den Vergleichsspektren bestimmt wird. Die bestimmte Schrittanzahl bezieht sich dabei auf aktuell von dem Schrittmotor ausgeführten Schritte bei Vorgabe einer vorbestimmten Schrittanzahl bzw. Anzahl von Schrittimpulsen. Auf diese Weise kann z.B. überprüft werden, ob sich das entsprechende Ventil an der gewünschten Position befindet bzw. seinen Verfahrweg vollständig durchlaufen hat.

Eine Endposition des Aktors, insbesondere des Umschaltventils, in der dieser sich in eine mechanisch definierte Endlage, beispielsweise an einen mechanischen Anschlag begibt, kann sich z.B. durch einen kurzen hochfrequenten Peak bemerkbar machen. Dieser kann als Referenz dienen, um ein Erreichen der Endposition des Aktors zu erkennen. Durch Erkennung der Endposition(en) des Aktors kann eine Anzahl vorgegebener Schrittimpulse begrenzt und z.B. im Falle eines Umschaltventils eine vollständige Öffnung eines Strömungswegs in dem Ventil sichergestellt werden.

Um die aktuelle Schrittanzahl des Schrittmotors zu bestimmen kann z.B. eine Vielzahl von Vergleichsspektren bestimmt werden, die jeweils eine ausgeführte Schrittanzahl bei vorgegebener Anzahl von Schrittimpulsen repräsentieren. Wenn die ausgeführte Schrittanzahl der vorgegebenen Anzahl von Schrittimpulsen entspricht, so ergibt sich im Frequenzspektrum ein ausgeprägter Peak bei Schrittfrequenz des Motors. Dieses Frequenzspektrum stellt somit ein Referenzspektrum für den Schrittmotor dar. Kann der Motor den vorgegebenen Schrittimpulsen, z.B. aufgrund von erhöhter Reibung oder anderen mechanischen Beeinträchtigungen, nicht folgen (Schrittverluste), so kann sich dies im Frequenzspektrum z.B. durch einen abgeschwächten, von der Schrittfrequenz abweichenden oder gänzlich fehlenden Peak bemerkbar machen. Letzteres kann insbesondere dann auftreten, wenn sich der Schrittmotor überhaupt nicht bewegt, weil z.B. das Ventil mechanisch blockiert. Es ist ebenso möglich, das Seitenbänder bzw. zusätzliche Frequenzkomponenten bei Schrittverlusten auftreten. Zur Ermittlung der Vielzahl von Vergleichsspektren für unterschiedliche Schrittanzahlen, können die mechanischen Beeinträchtigungen z.B. an einem oder mehreren Ventilen mit Schrittmotor gezielt herbeigeführt werden. Insbesondere können auch hier KI-Modelle wie CNN oder Random-Forest genutzt werden, um basierend auf der Vielzahl von Vergleichsspektren charakteristische Merkmale oder Muster zu lernen, die eine jeweilige Schrittanzahl repräsentieren. Es ist ebenso möglich, das Sensorsignal des Vibrationssensors im Zeitbereich zu analysieren, um einen Schrittverlust zu detektieren. Dazu kann beispielsweise nach jedem vorgegebenen Schrittimpuls eine Amplitude des Sensorsignals bestimmt und mit einer Grenzamplitude vergleichen werden. Alternativ oder zusätzlich kann ein Integral, insbesondere ein gewichtetes Intergral, des Sensorsignals über der Zeit gebildet und mit einem Grenzintegral verglichen werden. Das Integral kann entweder für einzelne Schrittimpulse oder für eine bestimmte Anzahl aufeinander folgender Schrittimpulse berechnet werden.

Gemäß einer Ausführungsform kann ein Fehlerzustand des zumindest einen Aktors, insbesondere des Expansions- und/oder Umschaltventils, erkannt werden, wenn die bestimmte Schrittanzahl des Schrittmotors von der vorbestimmten Schrittanzahl bzw. den vorgegebenen Schrittimpulsen abweicht. In diesem Fall kann eine Maßnahme eingeleitet werden, die zweckmäßigerweise abhängig von der Anzahl der Schrittverluste sein kann. Die Maßnahme kann insbesondere eine vorbestimmte Ansteuerung des fehlerhaften Aktors umfassen. Wenn beispielsweise erkannt wird, dass der Schrittmotor des Umschaltventils z.B. zwei Schritte weniger als an Schrittimpulsen vorgegeben ausgeführt hat, so können gezielt zwei weitere Schrittimpulse abgesetzt werden, um den gewünschten Strömungsweg in dem Ventil vollständig zu öffnen. Bei einer höheren Anzahl von Schrittverlusten kann z.B. ein vorbestimmtes Ansteuermuster vorgegeben werden, um etwaige Verschmutzungen, Korrosion oder andere Beläge in dem Umschaltventil durch eine gezielte Bewegung desselben zu entfernen. Ein solches vorbestimmtes Ansteuermuster kann zudem präventiv in regelmäßigen Abständen an allen schrittmotorengesteuerten Ventilen des Wärmeerzeugers durchgeführt werden.

Ein Fehlerzustand eines kontinuierlich drehenden Aktors, wie Pumpe, Ventilator oder Kompressor, kann z.B. dann erkannt werden, wenn eine Amplitude bei Drehfrequenz des jeweiligen Aktors die im Voraus ermittelte Referenzamplitude überschreitet. Dabei kann zusätzlich die Höhe der Überschreitung als Kriterium verwendet werden, um zu beurteilen, ob das Verhalten der betreffenden Aktors noch zulässig oder bereits fehlerhaft ist. Insbesondere kann auch hier ein Kl-Modell wie beispielsweise ein Autoencoder eingesetzt werden, das auf Basis einer Vielzahl von Referenzamplituden trainiert wird, um daraus auf einen Fehlerzustand zu schließen.

Wenn ein Fehler an einem kontinuierlich drehenden Aktor erkannt wird, so kann ebenfalls eine Maßnahme eingeleitet werden, die eine vorbestimmte Ansteuerung des betreffenden Aktors umfassen kann. Wenn beispielsweise an der Pumpe bei einer bestimmten Drehfrequenz ein Fehler detektiert wurde, so kann diese derart angesteuert werden, dass sie z.B. nacheinander eine Vielzahl von unterschiedlichen Drehfrequenzen durchläuft, um zu überprüfen, ob der Fehler bei weiteren Drehfrequenzen auftritt. Abhängig vom Überprüfungsergebnis kann die Pumpe dann weiter betrieben oder ausgetauscht werden.

Es wird deutlich, dass mittels des erfindungsgemäßen Verfahrens unterschiedliche Zustände einer Vielzahl von Aktoren in einem Wärmeerzeuger bestimmt und bewertet werden können. Dies ermöglicht es z.B. einen grenzwertigen Zustand eines Aktors zu erkennen und Gegenmaßnahmen zu ergreifen, um einen Fehler an dem betreffenden Aktor zu vermeiden. Zudem können fehlerhafte Aktoren frühzeitig erkannt und daraufhin Maßnahmen eingeleitet werden, die ein ineffizientes Verhalten oder einen Ausfall des Wärmeerzeugers vermeiden. Die eingeleiteten Maßnahmen können weiterhin dazu dienen eine Lebensdauer der Aktoren zu verlängern.

Eine erfindungsgemäße Recheneinheit ist, insbesondere programmtechnisch, dazu eingerichtet, das vorstehend beschriebene erfindungsgemäße Verfahren durchzuführen. Bei der Recheneinheit kann es sich insbesondere um die Steuereinheit des Wärmeerzeugers handeln.

Auch die Implementierung des erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn eine ausführende Recheneinheit, wie die Steuereinheit des Wärmeerzeugers, noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

### Kurzbeschreibung der Figuren

Figur 1 zeigt schematisch und exemplarisch einen Wärmeerzeuger, in dem ein erfindungsgemäßes Verfahren zum Einsatz kommen kann.
Figuren 2a und 2b zeigen schematisch und exemplarisch Frequenzspektren, wie sie gemäß einer Ausführungsform des erfindungsgemäßen Verfahrens ermittelt werden können.
Figuren 3a bis 3c zeigen schematisch und exemplarisch weitere Frequenzspektren, wie sie gemäß einer weiteren Ausführungsform des erfindungsgemäßen Verfahrens ermittelt werden können.
Figur 4 zeigt ein Flussdiagramm mit Verfahrensschritten gemäß einer Ausführungsform des erfindungsgemäßen Verfahrens.
Figuren 5a und 5b zeigen schematisch und exemplarisch Sensorsignale, wie sie von einem Vibrationssensor des Wärmeerzeugers aus Figur ermittelt werden können, sowie zugehörige Frequenzspektren gemäß einer Ausführungsform der Erfindung.

### Detaillierte Beschreibung bevorzugter Ausführungsbeispiele

Im Folgenden werden Ausführungsbeispiele der vorliegenden Erfindung anhand beispielhafter Figuren detailliert beschrieben. Die Merkmale der Ausführungsbeispiele sind im Ganzen oder teilweise kombinierbar und die vorliegende Erfindung ist nicht auf die beschriebenen Ausführungsbeispiele beschränkt.

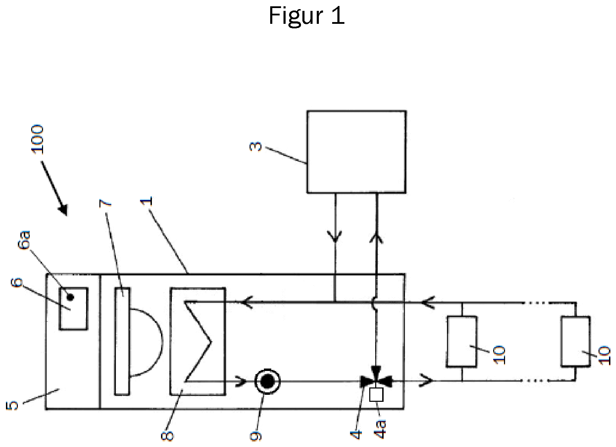

Figur 1 zeigt schematisch und exemplarisch einen Wärmeerzeuger 100, der als Heizgerät 100 ausgeführt ist und in dem ein erfindungsgemäßes Verfahren zum Einsatz kommen kann.

Das dargestellte Heizgerät 100 umfasst ein Gehäuse 1, in dem eine Steuereinheit 5 mit einer Platine 6 angeordnet ist. Auf der Platine 6 ist ein Vibrationssensor 6a angebracht, der als piezoresistiver, piezoelektrischer oder kapazitiver Beschleunigungssensor ausgeführt sein kann. Insbesondere kann es sich um einen MEMS-Beschleunigungssensor (Microelectro-mechanical Systems) handeln. In dem Gehäuse 1 ist zudem ein Brenner 7 angebracht, in dem ein Brennstoff verbrannt wird und an dem ein Ventilator (nicht dargestellt) zur Zufuhr von Frischluft und/oder Abfuhr von Abgas angebracht ist. Angrenzend an den Brenner 7 ist ein Wärmeträgerkreislauf mit einem Wärmeübertrager 8, einer Pumpe 9 und einem Umschaltventil 4 angeordnet, der mittels des Umschaltventils 4 wahlweise mit Heizkörpern 10 oder einem Warmwasserbereiter 3 verbunden werden kann. Bei dem Umschaltventil 4 kann es sich beispielsweise um ein 3/2-Wegeventil handeln, das mittels eines Schrittmotors 4a betätigt wird. Der Ventilator und die Pumpe 9 können jeweils von einem Elektromotor (nicht dargestellt) angetrieben werden. Die Aktoren 4, 9 des Heizgeräts, nämlich die Pumpe 9, das Umschaltventil 4 und der Ventilator, sowie der Vibrationssensor 6a sind signaltechnisch mit der Steuereinheit 5 verbunden (nicht dargestellt).

Bei der Verbrennung im Brenner 7 entstehende Wärme wird mittels des Wärmeübertragers 8 auf ein Wärmeträgermedium (insbesondere Wasser) in dem Wärmeträgerkreislauf übertragen. Das Wärmeträgermedium wird von der Pumpe 9 durch den Wärmeträgerkreislauf gefördert und strömt von dem Wärmeübertrager 8 zu dem Umschaltventil 4, von wo es entweder zu den Heizkörpern 10 oder zu dem Warmwasserbereiter 3 gelangt. Das von diesen Wärmeverbrauchern 10, 3 zurückströmende, abgekühlte Wärmeträgermedium strömt dann zurück zu dem Wärmeübertrager 8 des Brenners 7.

Zur Betätigung des Umschaltventils 4 wird dessen Schrittmotor 4a von der Steuereinheit 5 angesteuert. Insbesondere kann die Steuereinheit 5 den Schrittmotor 4a mit einer vorbestimmten Anzahl Schrittimpulse ansteuern, um das Umschaltventil 4 z.B. von einer ersten Stellung, in welcher die Heizkörper 10 an den Wärmeträgerkreislauf angeschlossen sind, in eine zweite Stellung, in welcher der Warmwasserbereiter 3 an den Wärmeträgerkreislauf angeschlossen ist, zu bewegen. Ebenso werden die Elektromotoren des Ventilators und der Pumpe 9 von der Steuereinheit 5 geeignet angesteuert, um z.B. die Pumpe 9 mit einer für eine benötigte Wärmemenge erforderlichen Drehzahl zu betreiben.

Es wird deutlich, dass ein Ausfall bzw. eine Funktionseinschränkung der Aktoren 4, 9, eine Wärmebereitstellung des Heizgeräts 100 unmittelbar beeinträchtigt. Daher werden die einzelnen Aktoren 4, 9 hinsichtlich ihrer Funktion überwacht. Dazu wird vorliegend bei einer Änderung einer Ansteuerung eines der Aktoren 4, 9 ein Signal des Vibrationssensors 6a aufgezeichnet und ein Frequenzspektrum des aufgezeichneten Signals ermittelt. Beispielsweise kann das Umschaltventil 4 eine Ansteueränderung erfahren, wenn sein Schrittmotor 4a zur Umschaltung des Wärmeträgerkreislaufs angesteuert wird. Es ist ebenso möglich, dass das Signal des Vibrationssensors 6a kontinuierlich aufgezeichnet wird. Die Aufzeichnung des Sensorsignals und die Ermittlung des Frequenzspektrums wird vorliegend von der Steuereinheit 5 durchgeführt. Diese vergleicht nachfolgend das ermittelte Frequenzspektrum mit einem oder mehreren Vergleichsspektren, die im Voraus ermittelt wurden und in der Steuereinheit 5 gespeichert sind. Die Vergleichsspektren repräsentieren unterschiedliche Zustände der Aktoren 4, 9, die sowohl Betriebszustände als auch Fehlerzustände sein können. Insbesondere können die Vergleichsspektren Referenzspektren enthalten, die einen fehlerfreien Betrieb der Aktoren 4, 9 beschreiben. Des Weiteren können die Vergleichsspektren Grenzspektren und Fehlerspektren umfassen, wobei die Grenzspektren Aktorzustände beschreiben, in denen diese noch ausreichend aber nicht mehr optimal funktionieren, und die Fehlerspektren Fehlerzustände der Aktoren 4, 9 darstellen. Anhand des Vergleichs des ermittelten Frequenzspektrums mit den Vergleichsspektren bestimmt die Steuereinheit 5 dann den Zustand des Aktors 4, 9, dessen Ansteuerung geändert wurde. Entspricht das ermittelte Frequenzspektrum einem der Vergleichsspektren, so kann daraus unmittelbar der Aktorzustand bestimmt werden. Um zu entscheiden, ob dies der Fall ist, kann der Vergleich insbesondere mittels eines KI-Modells erfolgen. Beispielsweise kann dazu ein Convolutional Neural Network (CNN) oder ein Random Forest-Modell verwendet werden.

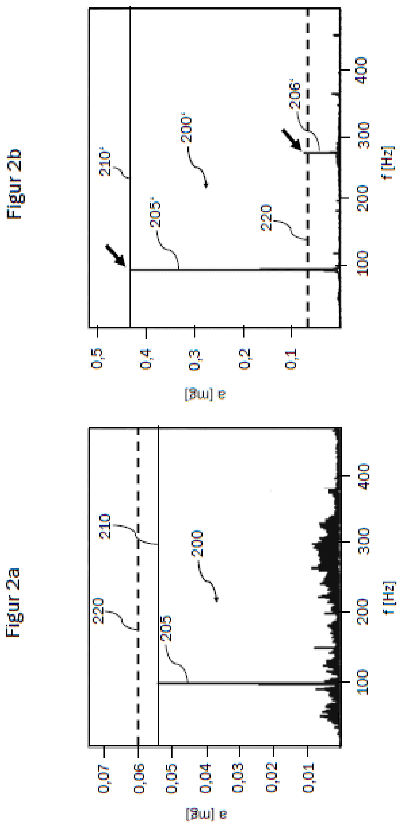

Figuren 2a und 2b zeigen schematisch und exemplarisch Frequenzspektren 200, 200', wie sie gemäß einer Ausführungsform des erfindungsgemäßen Verfahrens ermittelt werden können. Insbesondere zeigen die Figuren 2a und 2b zwei Frequenzspektren 200, 200' der Pumpe 9 aus Figur 1. Aufgetragen ist jeweils die Beschleunigung a in Milli-g (mg, entsprechend dem Tausendstel der Erdbeschleunigung g) über der Frequenz f in Hertz (Hz). Dabei stellt Figur 2a ein Frequenzspektrum 200 dar, in dem die Pumpe 9 einen fehlerfreien Zustand aufweist (Referenzspektrum 200), während Figur 2b ein Frequenzspektrum 200' zeigt, das einen Fehlerzustand der Pumpe 9 repräsentiert (Fehlerspektrum 200').

Anhand von Figur 2a wird deutlich, dass das Referenzspektrum 200 der Pumpe 9 einen Peak 205 bei einer Frequenz von f ~ 100Hz aufweist, die der aktuellen Drehfrequenz der Pumpe 9 entspricht. Die Amplitude 210 des Peaks 205 (Referenzamplitude 210) ist als durchgezogene Linie und eine gerade noch zulässige Amplitude 220 (Grenzamplitude 220) bei der Drehfrequenz von f ~ 100Hz ist als gestrichelte Linie in Figur 2a eingezeichnet.

Diese Grenzamplitude 220 findet sich auch in Figur 2b, die das Fehlerspektrum 200' der Pumpe 9 darstellt, das vorliegend einen Lagerschaden derselben repräsentiert. Dadurch tritt bei der Drehfrequenz von f ~ 100Hz ein Peak 205' auf, dessen Amplitude 210' die Grenzamplitude 220 weit überschreitet (hervorgehoben durch den Pfeil an der Spitze des Peaks 205'). Des Weiteren weist das Fehlerspektrum 200' einen weiteren Peak 206' bei einer Frequenz von f ~ 280 Hz auf, der ebenfalls die Grenzamplitude 220 überschreitet (hervorgehoben durch den Pfeil an der Spitze des Peaks 206'). Dieser entspricht im Wesentlichen einer Harmonischen der Drehfrequenz und taucht in dem Referenzspektrum 200 nicht auf.

Es wird deutlich, dass bei einem kontinuierlich rotierenden Aktor, wie der Pumpe 9, eine Referenz- bzw. Grenzamplitude 210, 220 bei Drehfrequenz eine zuverlässige Möglichkeit darstellt, einen Fehler an dem Aktor zu detektieren. Im vorliegenden Fall ist die Amplitude 210' des Fehlerspektrums 200' etwa um Faktor 8 höher als die Grenzamplitude 220. Daraus kann geschlossen werden, dass ein gravierender Lagerschaden vorliegt, der eine Reparaturmaßnahme bzw. ein Austausch der Pumpe 9 erfordert.

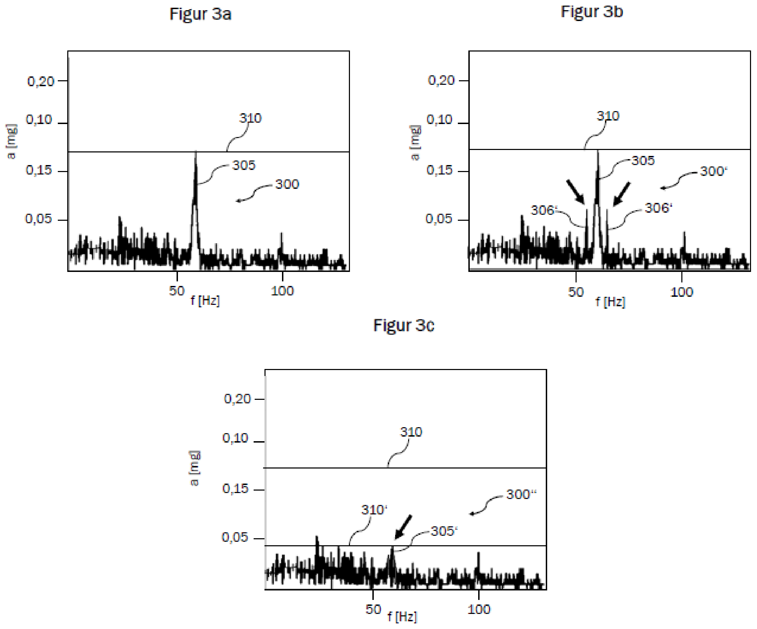

Figuren 3a bis 3b zeigen weitere Frequenzspektren 300, 300', 300", wie sie gemäß einer weiteren Ausführungsform des erfindungsgemäßen Verfahrens ermittelt werden können. Insbesondere zeigen die Figuren 3a bis 3c drei Frequenzspektren 300, 300', 300" des Schrittmotors 4a zur Betätigung des Umschaltventils 4 aus Figur 1. Aufgetragen ist wiederum die Beschleunigung a in Milli-g (mg) über der Frequenz f in Hertz (Hz). Dabei stellt Figur 3a ein Frequenzspektrum 200 dar, in dem das Umschaltventil 4 einen fehlerfreien Zustand aufweist (Referenzspektrum 300), während die Figuren 3b und 3c jeweils ein Frequenzspektrum 300', 300" zeigen, das einen spezifischen Fehlerzustand des Umschaltventils 4 bzw. dessen Schrittmotors 4a repräsentiert (Fehlerspektren 300', 300").

Anhand von Figur 3a wird deutlich, dass das Referenzspektrum 300 des Schrittmotors 4a einen Peak 305 bei einer Frequenz von f ~ 60Hz aufweist, die der Schrittfrequenz des Schrittmotors 4a entspricht. Die Amplitude 310 des Peaks 305 (Referenzamplitude 310) ist wiederum als durchgezogene Linie in Figur 3a eingezeichnet.

Das in Figur 3b eingezeichnete Fehlerspektrum 300' weist ebenfalls den Peak 305 mit der Amplitude 310 bei der Schrittfrequenz von f ~ 60Hz des Schrittmotors 4a auf. Allerdings treten hier zusätzliche Seitenbänder 306' neben dem Peak 305 auf (hervorgehoben durch entsprechende Pfeile an den Spitzen der Seitenbänder 306'), die auf einen Schrittverlust des Motors 4a hindeuten. Um die genaue Anzahl von verlorenen Schritten zu bestimmen, kann das Fehlerspektrum 300' mit einer Vielzahl von Vergleichsspektren verglichen werden, die in der Steuereinheit 5 gespeichert sind und eine Schrittanzahl des Schrittmotors 4a repräsentieren. Dabei kann ein Vergleichsspektrum ermittelt werden, das die größte Ähnlichkeit mit dem Fehlerspektrum 300' aufweist und auf diese Weise die Schrittanzahl bzw. die fehlenden Schritte des Schrittmotors 4a bestimmt werden.

In Figur 3c ist ein Fehlerspektrum 300" sowie die Referenzamplitude 310 dargestellt. Es wird deutlich, dass hier bei der Schrittfrequenz von f ~ 60Hz des Schrittmotors 4a nur noch eine sehr geringer Peak 305' auftritt, dessen Amplitude 310' kaum über eine Rauschamplitude des Signals hinausgeht (hervorgehoben durch einen Pfeil an der Spitze des Peaks 305'). Aus diesem Fehlerspektrum 300" kann abgeleitet werden, dass sich der Schrittmotor 4a nahezu überhaupt nicht bewegt, da kein signifikanter Peak bei der Schrittfrequenz erkennbar ist. Um dies zu bestätigen kann das ermittelte Fehlerspektrum 300" wiederum mit der Vielzahl von Vergleichsspektren verglichen und daraus die fehlenden Schritte des Schrittmotors 4a bestimmt werden.

Es wird deutlich, dass anhand von Vergleichsspektren spezifische Fehlerzustände, insbesondere Schrittverluste des Schrittmotors 4a zuverlässig ermittelt werden können. Je nach Schwere der ermittelten Schrittverluste kann diesen mit einer vorbestimmten Ansteuerung des Schrittmotors 4a entgegengewirkt werden. Wenn z.B. nur ein oder zwei Schritte zu der vorgegebenen Anzahl von Schrittimpulsen fehlen, so kann die Steuereinheit 5 z.B. ein oder zwei weitere Schrittimpulse absetzen. Bei einer höheren Anzahl von Schrittverlusten oder einer Blockade kann die Steuereinheit 5 z.B. ein vorbestimmtes Ansteuermuster vorgegeben, um etwaige Verschmutzungen, Korrosion oder andere Beläge in dem Umschaltventil 4 durch eine gezielte Bewegungen desselben zu entfernen. Auf diese Weise kann ggf. ein Austausch des Umschaltventils 4 bei Auftreten eines Fehlerzustands vermieden werden.

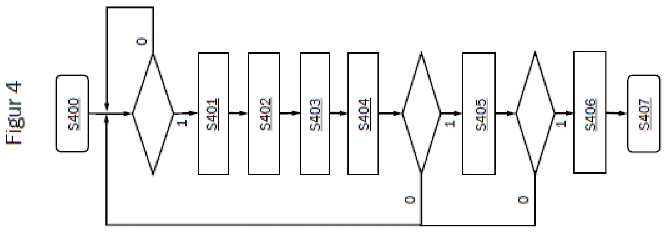

Figur 4 zeigt ein Flussdiagramm mit Verfahrensschritten gemäß einer Ausführungsform des erfindungsgemäßen Verfahrens. Dabei wird nach Start des Verfahrens in Schritt S400 zunächst überprüft, ob eine Ansteueränderung eines der Aktoren 4, 9 vorliegt. Wenn dies der Fall ist (Pfad "1"), so wird in einem nächsten Schritt S401 ein Signal des Vibrationssensors 6a aufgezeichnet. Die Aufzeichnung kann z.B. für eine bestimmte Zeit erfolgen. Beispielsweise kann bei Auftreten einer Ansteuerung des Schrittmotors 4a das Sensorsignal während der gesamten Ansteuerdauer bzw. des gesamten Umschaltvorgangs des Umschaltventils 4 aufgezeichnet werden. Im gegenteiligen Fall (Pfad "0") wird vorliegend erneut überprüft, ob ein Aktor 4, 9 eine Ansteueränderung erfährt.

Nach dem Aufzeichnen des Sensorsignals in Schritt S401 wird in Schritt S402 ein Frequenzspektrum des aufgezeichneten Signals ermittelt. Dieses wird in Schritt S403 mit einer Vielzahl von Vergleichsspektren verglichen und basierend auf diesem Vergleich wird in Schritt S404 ein Zustand des betreffenden Aktors 4, 9 bestimmt. Entspricht der bestimmte Zustand einem Referenzzustand des Aktors 4, 9 (Pfad "0"), so wird der Aktor ohne weitere Maßnahme weiterbetrieben, da kein Fehler vorliegt. In diesem Fall kehrt das Verfahren vorliegend zum Anfang zurück und überprüft, ob ein weiterer Aktor 4, 9 eine Ansteueränderung erfährt. Entspricht der bestimmte Zustand hingegen einem Fehlerzustand des Aktors (Pfad "1"), so wird dieser in Schritt S405 mit einer vorbestimmten Ansteuerung betrieben, um dem Fehlerzustand entgegenzuwirken. Wenn diese Maßnahme erfolgreich ist (Pfad "0"), kehrt das Verfahren zum Anfang zurück und überprüft erneut, ob eine Ansteueränderung an einem weiterer Aktor 4, 9 vorliegt. Anderenfalls (Pfad "1") wird in Schritt S406 eine Fehlermeldung ausgegeben und ein Betrieb des Wärmeerzeugers 100 in Schritt S407 beendet, um z.B. eine Reparatur oder einen Austausch des betreffenden Aktors 4, 9 vorzunehmen.

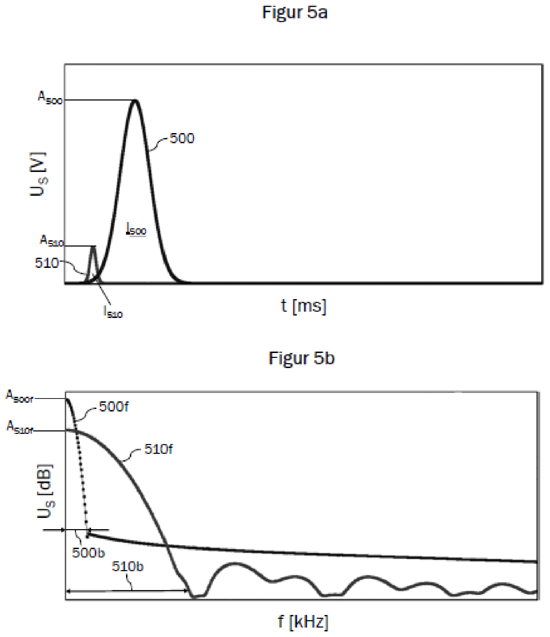

Figuren 5a und 5b zeigen schematisch und exemplarisch zwei Sensorsignale 500, 510, wie sie von einem Vibrationssensor 6a des Wärmeerzeugers 100 aus Figur 1 ermittelt werden können, sowie zugehörige Frequenzspektren 500f, 510f gemäß einer Ausführungsform der Erfindung.

Dabei zeigt Figur 5a ein Diagramm in dem eine Ausgangsspannung Us des Vibrationssensors 6a über einer Zeit t aufgetragen ist. Die Ausgangsspannung Us ist in Volt (V) und die Zeit t ist in Millisekunden (ms) angegeben. Die beiden Sensorsignale 500, 510 stellen jeweils eine Reaktion des Schrittmotors 4a des Umschaltventils 4 auf einen einzelnen Schrittimpuls dar. Dabei repräsentiert das Sensorsignal 500 einen vollständig ausgeführten Einzelschritt des Schrittmotors 4a, während das Sensorsignal 510 nur eine kurze Bewegung des Schrittmotors 4a zeigt, die einen Schrittverlust zur Folge hat.

Zur Detektion des Schrittverlustes kann im Zeitbereich beispielsweise die Amplitude A510 des Sensorsignals 510 mit einer vorbestimmten Grenzamplitude verglichen werden, die z.B. basierend auf der Amplitude A500 des Sensorsignals 500 bestimmt werden kann. Es ist ebenso möglich, ein Integral I₅₁₀ des Sensorsignals 510 zu bilden und dies mit einem vorbestimmten Integralwert zu vergleichen, der z.B. basierend auf dem Integral I₅₀₀ des Sensorsignals 500 bestimmt werden kann. Insbesondere können in diesem Zusammenhang gewichtete Integrale verwendet werden.

Figur 5b zeigt ein Diagramm in dem die Frequenzspektren 500f, 510f der Sensorsignale 500, 510 dargestellt sind. Dazu ist die Ausgangsspannung Us des Vibrationssensors 6a über der Frequenz f aufgetragen. Die Ausgangsspannung Us ist hier in Dezibel (dB) und die Frequenz f in Kilohertz (kHz) angegeben.

Es wird deutlich, dass das Frequenzspektrum 500f des Sensorsignals 500, das den vollständig ausgeführte Einzelschritt repräsentiert, ein deutlich schmaleres Frequenzband im Bereich der Schrittfrequenz des Schrittmotors 4a aufweist als das Frequenzspektrum 510f des Sensorsignals 510, das auf einen Schrittverlust hindeutet. Insofern kann zur Detektion des Schrittverlustes im Frequenzbereich z.B. eine Breite 510b des Frequenzspektrums 510f im Bereich der Schrittfrequenz des Schrittmotors 4a bestimmt und mit einer vorbestimmten Breite verglichen werden. Die vorbestimmte Breite kann z.B. basierend auf der Breite 500b des Frequenzbands des Frequenzspektrums 500f bestimmt werden. Analog zur Auswertung der Sensorsignale 500, 510 im Zeitbereich kann alternativ oder zusätzlich die Amplitude A_{510f} des Frequenzspektrums 510f mit einer vorbestimmten Grenzamplitude verglichen werden, wobei die Grenzamplitude z.B. basierend auf der Amplitude A_{500f} des Frequenzspektrums 500f bestimmt werden kann. Es ist ebenso möglich eine Leistung des Frequenzspektrums 510f zu bestimmen und dies mit einer Grenzleistung zu vergleichen, um einen Schrittverlust zu detektieren.

Anhand der beschriebenen Ausführungsbeispiele wird deutlich, dass mittels des erfindungsgemäßen Verfahrens unterschiedliche Zustände einer Vielzahl von Aktoren 4, 9 in einem Wärmeerzeuger 100 bestimmt und bewertet werden können. Dies ermöglicht es z.B. einen grenzwertigen Zustand eines Aktors 4, 9 zu erkennen und Gegenmaßnahmen zu ergreifen, um einen Fehler an dem betreffenden Aktor 4, 9 zu vermeiden. Zudem können fehlerhafte Aktoren 4, 9 frühzeitig erkannt und daraufhin Maßnahmen eingeleitet werden, die ein ineffizientes Verhalten oder einen Ausfall des Wärmeerzeugers 100 vermeiden. Die eingeleiteten Maßnahmen können weiterhin dazu dienen eine Lebensdauer der Aktoren 4, 9 zu verlängern.

## Patentansprüche

1. Verfahren zur Bestimmung eines Zustands einer Vielzahl von Aktoren (4, 9) in einem Wärmeerzeuger (100) mittels eines Vibrationssensors (6a), der in dem Wärmeerzeuger (100) beabstandet von den Aktoren (4, 9) angeordnet ist, umfassend die Schritte:
- Aufzeichnen eines Signals des Vibrationssensors (6a);
- Ermitteln eines Frequenzspektrums (200, 200', 300, 300', 300") des aufgezeichneten Signals;
- Vergleichen des ermittelten Frequenzspektrums (200, 200', 300, 300', 300") mit einem oder mehreren Vergleichsspektren; und
- Bestimmen eines Zustands der Aktoren (4, 9) basierend auf dem Vergleich des ermittelten Frequenzspektrums (200, 200', 300, 300', 300") mit den Vergleichsspektren.

2. Verfahren nach Anspruch 1, wobei das Signal des Vibrationssensors (6a) aufgezeichnet wird, wenn sich eine Ansteuerung eines der Aktoren (4, 9) ändert.

3. Verfahren nach Anspruch 2, wobei eine Ansteuerung eines Aktors (4, 9) manuell geändert wird, um den Zustand des Aktors (4, 9) zu bestimmen.

4. Verfahren nach zumindest einem der vorstehenden Ansprüche, wobei für jeden Aktor (4, 9) eine Vielzahl von Vergleichsspektren ermittelt wird, die jeweils einen Zustand des Aktors (4, 9) repräsentieren.

5. Verfahren nach zumindest einem der vorstehenden Ansprüche, wobei der Vergleich des ermittelten Frequenzspektrums (200, 200', 300, 300', 300") mit den Vergleichsspektren mittels eines Kl-Modells erfolgt.

6. Verfahren nach zumindest einem der vorstehenden Ansprüche, wobei ein Zustand jedes Aktors (4, 9) ein Betriebszustand und/oder ein Fehlerzustand ist.

7. Verfahren nach Anspruch 6, wobei bei einem Fehlerzustand eines Aktors (4, 9) eine Maßnahme eingeleitet wird.

8. Verfahren nach Anspruch 7, wobei die Maßnahme eine vorbestimmte Ansteuerung des fehlerhaften Aktors umfasst.

9. Verfahren nach zumindest einem der vorstehenden Ansprüche, wobei zumindest einer der Aktoren (4) von einem Schrittmotor (4a) angetrieben wird und eine Schrittanzahl des Schrittmotors (4a) und/oder eine Endposition des Aktors (4) basierend auf dem Vergleich des ermittelten Frequenzspektrums (200, 200', 300, 300', 300") mit den Vergleichsspektren bestimmt wird.

10. Verfahren nach den Ansprüchen 7 und 9, wobei ein Fehlerzustand des zumindest einen Aktors (4) erkannt wird, wenn die bestimmte Schrittanzahl von einer vorbestimmten Schrittanzahl abweicht.

11. Recheneinheit (5) umfassend einen Prozessor, der so konfiguriert ist, dass er das Verfahren nach zumindest einem der vorstehenden Ansprüche ausführt.

12. Wärmeerzeuger (100) umfassend
eine Vielzahl von Aktoren (4, 9),
einen Vibrationssensor (6a), der beabstandet von den Aktoren (4, 9) angeordnet ist, und die Recheneinheit (5) nach Anspruch 11.

13. Wärmeerzeuger (100) nach Anspruch 12, wobei der Vibrationssensor (6a) auf einer Platine (6) einer Steuereinheit des Wärmeerzeugers (100) angeordnet ist.

14. Computerprogramm umfassend Befehle, die bei der Ausführung des Programms durch einen Computer diesen veranlassen, das Verfahren nach Anspruch 1 bis 10 auszuführen.

15. Computerlesbarer Datenträger, auf dem das Computerprogramm nach Anspruch 14 gespeichert ist.
